# FASCICULE DE BREVET EUROPEEN

(11) **EP 3 163 898 B1**
(45) Date de publication et mention de la délivrance du brevet: **26.06.2019**
(21) Numéro de dépôt: 16193881.6
(22) Date de dépôt: 14.10.2016
(51) Int. Cl.: H04Q 9/00, F02N 11/00, B60H 1/22

(54) **PROCÉDÉ DE LOCALISATION D'UN VÉHICULE MOTORISÉ PAR RAPPORT À UN ESPACE CONFINÉ**
VERFAHREN ZUR ORTUNG EINES KRAFTFAHRZEUGS IM VERHÄLTNIS ZU EINEM BEGRENZTEN RAUM
METHOD FOR LOCATING A MOTOR VEHICLE IN RELATION TO A CONFINED SPACE

(30) Priorité: 28.10.2015 FR 1560280
(43) Date de publication de la demande: 03.05.2017
(73) Titulaire: PSA Automobiles SA, 78300 Poissy (FR)
(72) Inventeur: MOLIN, Yoann, 73200 Mercury (FR)

(56) Documents cités:
- WO-A1-2013/188536
- US-A1- 2008 117 079
- US-A1- 2009 312 975
- US-A1- 2015 142 309

## Description

La présente invention concerne un procédé de localisation d'un véhicule motorisé afin de déterminer si le véhicule entre ou sort d'un espace confiné.

Un tel procédé est déjà décrit dans la publication US2015/0142309.

Un espace confiné désigne un espace fermé, totalement ou partiellement fermé dont les moyens d'accès, à l'extérieur comme à l'intérieur, sont restreints.

Cette définition s'applique notamment à un emplacement de parking situé en sous-sol d'un bâtiment ou plus généralement d'une infrastructure destinée à accueillir des véhicules pour leur stationnement et n'ayant que peu de communication avec l'air extérieur.

L'information précise selon laquelle un véhicule est en cours de stationnement ou en cours de sortie de stationnement d'une telle infrastructure peut être très utile notamment quand une fonction de préconditionnement thermique, notamment de l'habitacle du véhicule, est souhaitée et qu'il est nécessaire d'utiliser le moteur thermique du véhicule pour disposer de l'énergie suffisante pour satisfaire la demande en termes de confort thermique à l'intérieur du véhicule.

Ainsi, dans les pays dits « chauds », ou en période de grande chaleur dans les pays dits « tempérés », il peut être est souhaitable de pouvoir faire descendre la température régnant à l'intérieur de l'habitacle d'un véhicule avant que son conducteur n'emprunte ledit véhicule. Un tel préconditionnement est généralement désigné par les termes anglosaxons de « pre-cooling ».

A l'inverse dans les pays dits « froids », ou en période de grand froid dans pays dits « tempérés », il peut être souhaitable de faire augmenter la température régnant à l'intérieur de l'habitacle d'un véhicule avant que son conducteur n'emprunte ledit véhicule. Un tel préconditionnement est généralement désigné par les termes anglosaxons de « pre-heating».

Des systèmes de « pre-heating » sont connus utilisant notamment des brûleurs externes n'utilisant pas le moteur.

On connait également notamment du document FR2727902, un système de « pre-cooling » permettant de refroidir l'habitacle d'un véhicule avant que son conducteur n'emprunte ledit véhicule utilisant l'alternateur qui fonctionne en moteur quand le véhicule est à l'arrêt.

Ses systèmes ne se préoccupent pas de la nuisance qu'ils pourraient générer en termes de pollution lorsque le véhicule est stationné dans un espace clos, et que l'apport du moteur est nécessaire pour assurer un « pre-cooling » optimal en termes de confort thermique et de rapidité d'action dans des conditions de températures élevées.

Ils ne sont donc pas contraints par l'environnement confiné que présente un parking souterrain par exemple.

Si le véhicule est entré dans un espace confiné, et que son moteur est coupé, il sera nécessaire de commander le démarrage du moteur avant que l'utilisateur du véhicule n'emprunte le véhicule.

Cette commande peut s'effectuer à distance sans que l'utilisateur du véhicule ne soit présent à proximité du véhicule ou, tout au moins, sans qu'il ait une vision directe du véhicule dans son environnement immédiat et donc sans savoir si le véhicule est à l'intérieur ou à l'extérieur d'un espace confiné.

Ce cas de figure implique une procédure sécuritaire/sanitaire pour pallier aux effets toxiques des agents polluants (gaz et/ou particules) générés par le moteur d'autant plus qu'ils sont présents en forte concentration dans un espace confiné.

La même procédure peut s'imposer également vis-à-vis du phénomène de dégazage des batteries quand la source de propulsion du véhicule est une machine électrique alimentée par des batteries d'accumulateurs.

La présente invention vise à identifier que le véhicule est entré dans un espace confiné dans le but de transmettre cette information à un système de commande de la source principale d'énergie motrice du véhicule tel qu'un moteur à combustion interne, source d'émission de gaz d'échappements, pour interdire le « pre-cooling ».

Un but de la présente invention est de localiser qu'un véhicule est entré dans un espace confiné afin d'interdire le préconditionnement du véhicule via le moteur du véhicule.

A cet effet, elle propose un procédé de localisation d'un véhicule à moteur, par rapport à un espace confiné, ledit véhicule étant équipé d'un groupe de climatisation et d'une pluralité de capteurs, caractérisé en ce qu'il consiste, à partir des informations délivrées par la pluralité de capteurs :
- dans une première étape, à détecter la direction de déplacement du véhicule par rapport à l'espace confiné ;
- dans une deuxième étape, à déterminer le sens de la pente sur laquelle se déplace le véhicule ;
- dans une troisième étape, à détecter une variation du niveau de pollution de l'air ambiant ; et
- à partir du résultat des première, deuxième et troisième étapes à en déduire que le véhicule entre ou sort de l'espace confiné.

Selon une caractéristique, le procédé consiste en outre :
- dans des quatrième et cinquième étapes, à restituer des informations caractérisant l'environnement du véhicule ; et
- dans une sixième étape, à détecter si un changement de luminosité de l'éclairage ambiant se produit ; et
- à partir du résultat des six étapes à en déduire que le véhicule entre ou sort de l'espace confiné.

Selon une autre caractéristique, le procédé consiste :
- dans la première étape, à détecter la direction de déplacement du véhicule par rapport à l'espace confiné à partir d'une information de géolocalisation délivrée par un récepteur GPS, et la cartographie associée, présent à bord du véhicule ;
- dans la deuxième étape, à exploiter les informations délivrées par un accéléromètre présent à bord du véhicule pour déterminer le sens de la pente sur laquelle se déplace le véhicule ; et
- dans la sixième étape, à détecter une variation du niveau de pollution de l'air ambiant ;
   Selon d'autres caractéristiques, dans les quatrième et cinquième étapes, le procédé consiste à restituer des informations caractérisant l'environnement du véhicule à partir de caméras frontale et arrière disposées respectivement à l'avant et à l'arrière du véhicule ;
- dans la sixième étape, le procédé consiste à détecter si un changement de luminosité se produit à partir d'un capteur de luminosité.

Selon une autre caractéristique, la première étape succède à une étape de mise à jour des informations de cartographie à partir d'une base de données contenant les dernières informations issues de véhicules ayant eu les mêmes informations de géolocalisation.

Selon une autre caractéristique, les quatrième et cinquième étapes succèdent respectivement à des étapes de mises à jour des informations caractérisant l'environnement du véhicule, à partir d'une base de données contenant les dernières informations issues de véhicules ayant eu les mêmes informations de géolocalisation.

La présente invention a pour deuxième objet un système pour la mise en oeuvre du procédé tel que décrit ci-dessus, caractérisé en ce qu'il comporte une pluralité de capteurs, parmi lesquels :
- un récepteur GPS et sa cartographie associée ;
- un accéléromètre apte à préciser le sens de la pente sur lequel se trouve le véhicule ;
- une caméra frontale apte à acquérir et restituer des images de l'avant du véhicule aptes à être analysées pour déterminer si le véhicule entre dans un espace confiné ;
- une caméra arrière apte à acquérir et restituer des images de l'arrière du véhicule aptes à être analysées afin de préciser si le véhicule est dans un espace confiné ;
- un capteur de luminosité apte à détecter un changement de l'intensité lumineuse quand le véhicule rentre dans un espace confiné ;
- un capteur de niveau de pollution apte à détecter les élévations rapides du niveau de pollution de l'air ambiant pour préciser que le véhicule entre dans un espace confiné ;
ladite pluralité de capteurs étant couplée à des moyens de traitement du véhicule traitant les informations délivrées par la pluralité de capteurs, eux-mêmes couplés à des moyens de commande du véhicule, recevant les informations traitées par les moyens de traitement pour commander le groupe de climatisation via le moteur du véhicule.

La présente invention a pour troisième objet, un véhicule automobile, caractérisé en ce qu'il supporte un système tel que décrit ci-dessus.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 illustre des premières étapes du procédé selon l'invention
- la figure 2 illustre les dernières étapes du procédé selon l'invention ;
- la figure 3 illustre les étapes de confirmation de position du véhicule du procédé selon l'invention ;
- la figure 4 illustre les étapes de détection d'entrée de parking du procédé selon l'invention ; et
- la figure 5 illustre l'architecture du système pour la mise en oeuvre du procédé selon l'invention.

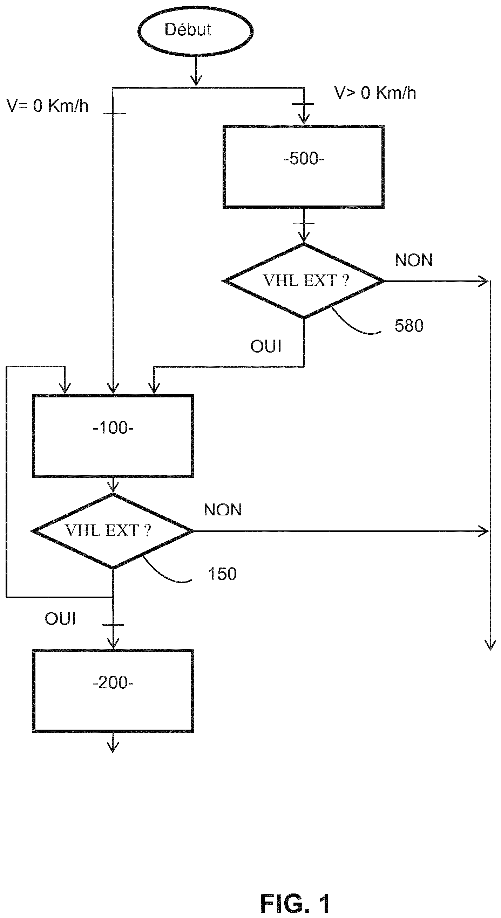

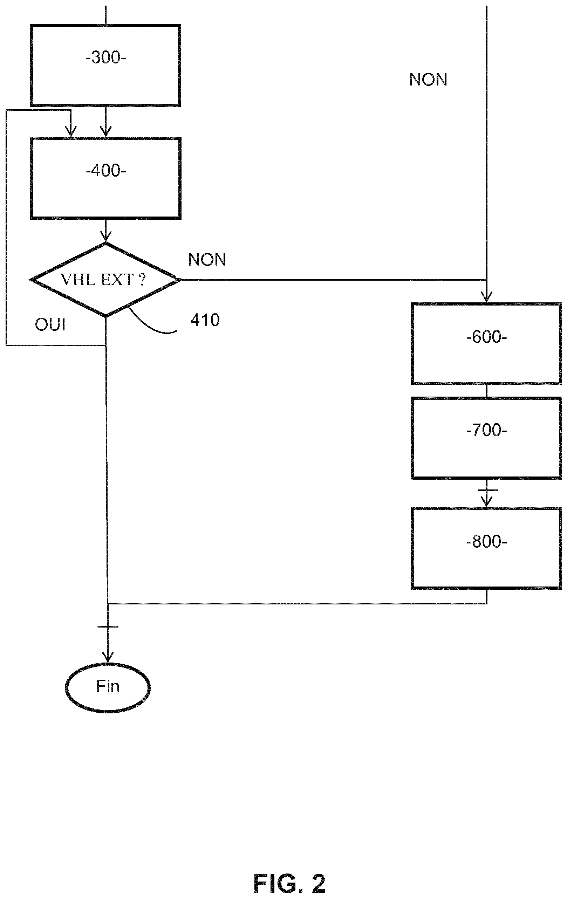

En référence aux figures 1 et 2, deux situations sont considérées au début du procédé selon l'invention : une première situation dans laquelle le véhicule VHL à préconditionner est à l'arrêt, moteur MOTH coupé ou pas (vitesse longitudinale du véhicule nulle : V = 0 Km/h) et une deuxième situation dans laquelle le véhicule roule/se déplace, moteur tournant (vitesse longitudinale du véhicule supérieure à 0 : V> 0 Km/h).

Dans la première situation (V = 0 Km/h), si le véhicule est arrêté, le procédé effectue une première détection 100 afin de déterminer si le véhicule est à l'intérieur ou à l'extérieur d'un immeuble.

Par immeuble, on entend, dans son sens courant, un bâtiment à usage privé ou public, comportant plusieurs étages ainsi qu'un ou plusieurs étages (ou niveaux) en sous-sol destinés au stationnement de véhicules. Ces aires de stationnement sont désignées généralement par « parkings sous-terrain » ou « parkings en sous-sol ».

Ces parkings sont agencés dans des espaces confinés, souvent aveugles qui nécessitent des éclairages artificiels ainsi qu'une ventilation adaptée pour évacuer les gaz d'échappement toxiques (néfastes à la santé) produits par les véhicules en cours de stationnement ou en sortie de stationnement du bâtiment.

Certains parkings souterrains disposent d'un circuit vidéo fermé capable de surveiller les allées et venues des véhicules dans le parking et notamment de les localiser précisément dans le parking. Un réseau local de communication peut également être agencé dans le parking pour permettre aux véhicules autorisés de partager notamment les informations de localisation.

Si à l'issue de l'étape 100, le véhicule est identifié comme étant stationné (à l'arrêt) à l'extérieur d'un bâtiment, une information 150 (VHL EXT ? = OUI) est délivrée au conducteur qui peut activer, à l'étape 200, une commande de « pre-cooling » à distance via son Smartphone (ou tout autre objet connecté : montre connectée, ...) avant d'emprunter à nouveau son véhicule.

La sortie de l'étape 100 est rebouclée sur son entrée tant que les conditions thermiques ne nécessitent pas un refroidissement et/ou que le niveau de pollution ne dépasse pas une valeur limite.

Le procédé est ainsi en veille permanente.

Dans une deuxième étape 200, la commande est reçue par le véhicule qui active alors le moteur et le groupe de climatisation si les conditions de température à l'intérieur de l'habitable le nécessitent. Par exemple, si la température régnant à l'intérieur de l'habitacle dépasse une valeur seuil déterminée pour laquelle une simple ventilation (ne nécessitant pas l'utilisation du moteur) ne serait pas suffisante pour garantir le confort thermique des passagers du véhicule en cas de fortes températures extérieures.

Dans une troisième étape 300 (FIG. 2), une temporisation peut être adaptée au cas de figure, par exemple une temporisation de 10', avant d'utiliser le véhicule, période pendant laquelle le moteur couplé au compresseur du groupe de climatisation pourra assurer un abaissement de la température de l'habitacle.

La durée sera adaptée en fonction de la température extérieure et de la température de consigne souhaitée à l'intérieur du véhicule.

La durée pourra aussi être limitée par des informations techniques, par exemple : niveau de carburant, ...

Une fois la durée de fonctionnement du moteur écoulée, une quatrième étape 400 consiste à confirmer la situation du véhicule, à savoir si le véhicule est bien stationné à l'air libre de manière à ce que son conducteur et éventuellement ses passagers, puissent approcher du véhicule et monter à bord du véhicule sans risque d'intoxication causé par les gaz d'échappement.

Cette vérification est importante pour garantir l'efficacité du procédé en termes de protection sanitaire.

Si la situation du véhicule est confirmée 410 à l'issue de l'étape 400 (VHL EXT ? = OUI) alors le procédé de « pre-cooling » est considéré achevé dans des conditions optimales (Fin).

La sortie de l'étape 400 est rebouclée sur son entrée tant que les conditions thermiques ne nécessitent pas un refroidissement et/ou que le niveau de pollution ne dépasse pas une valeur limite.

Le procédé est ainsi en veille permanente.

La temporisation peut s'arrêter automatiquement au bout de la temporisation des 10' ou quand le conducteur ou l'un des passagers commande l'ouverture d'un des ouvrants du véhicule ou dans le cas où le niveau de la batterie d'accumulateurs devient inférieur à un seuil déterminé (cas où le moteur ne tourne pas et que seule la ventilation est activée et alimentée par la batterie).

En partant maintenant d'une situation de début de procédé dans laquelle, le véhicule roule, moteur tournant (vitesse longitudinale du véhicule supérieure à 0 Km/h : V> 0 Km/h), le procédé dans une étape 500, détecte si le véhicule entre ou sort d'un espace confiné, typiquement un parking sous-terrain.

A l'issue de cette étape 500, si le véhicule est détecté 580 comme rentrant effectivement à l'intérieur d'un bâtiment (VHL EXT ? = NON) alors, dans une étape 600 (FIG. 2), une information est transmise au conducteur lui demandant d'arrêter le moteur. La ventilation du véhicule reste active alimentée uniquement par la batterie jusqu'à la fin du besoin.

Dans une étape 700, l'information selon laquelle le véhicule est à l'intérieur d'un bâtiment (typiquement dans un parking sous-terrain) est mémorisée dans une base de données et partagée via un serveur distant avec d'autres véhicules autorisés.

A l'issue de cette manoeuvre considérée comme une manoeuvre de stationnement, le conducteur quitte le véhicule.

Lorsque le conducteur veut retourner à son véhicule, il demande ou émet une requête de « pre-cooling » qui est transmise au véhicule et le procédé, en retour, émet une demande de confirmation avec acquittement par le conducteur, par exemple sur son Smartphone, et dans l'étape 800, une commande de pré-ventilation de l'habitacle pendant une durée de 10' par exemple, est activée si un abaissement de la température est nécessaire.

Au bout de la temporisation de 10' ou quand le conducteur ou l'un des passagers commande l'ouverture d'un ouvrant du véhicule ou dans le cas où le niveau de la batterie d'accumulateurs devient inférieur à un seuil déterminé (le moteur ne tourne pas, la ventilation est alimentée uniquement par la batterie) : le procédé est terminé (Fin).

Toujours dans la même situation (vitesse longitudinale du véhicule supérieure à 0 Km/h : V> 0 Km/h) mais dans le cas où à l'issue de l'étape 500 (FIG. 1), le véhicule est détecté 580 comme étant à l'extérieur d'un bâtiment (à l'air libre) (VHL EXT ? = OUI), alors le procédé repasse à l'étape 100 (1^{ère} étape de la première situation).

De même, dans la première situation (V = 0 Km/h), si à l'issue de l'étape 100, le véhicule est considéré, à l'étape 150 comme étant à l'intérieur d'un bâtiment (VHL EXT ? = NON), alors le procédé passe à l'étape 600.

De même, dans la première situation, si à l'issue de l'étape 400, le véhicule est considéré comme étant à l'intérieur d'un bâtiment (VHL EXT ? = NON), alors le procédé passe à l'étape 600 (FIG. 2).

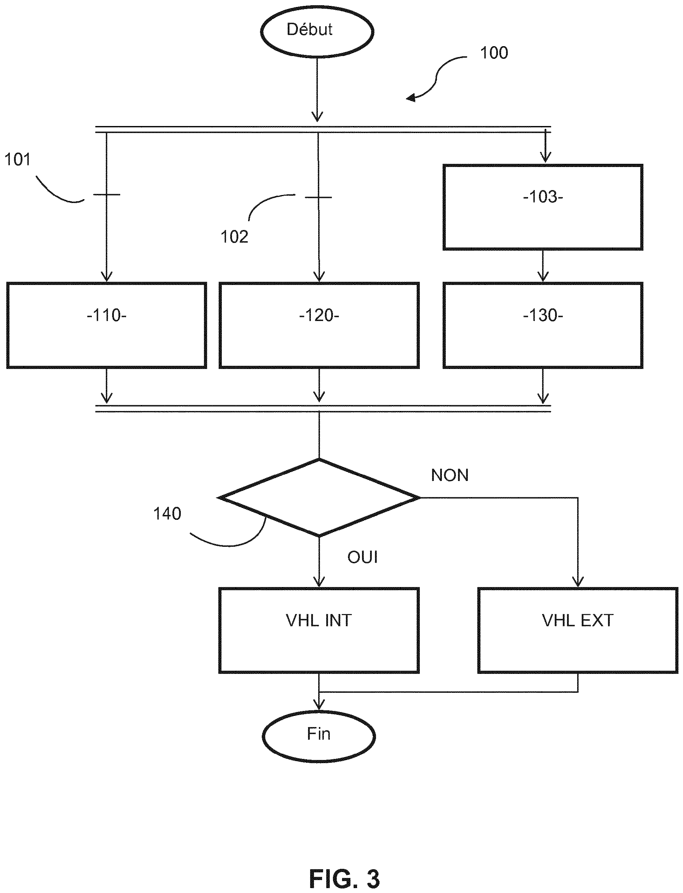

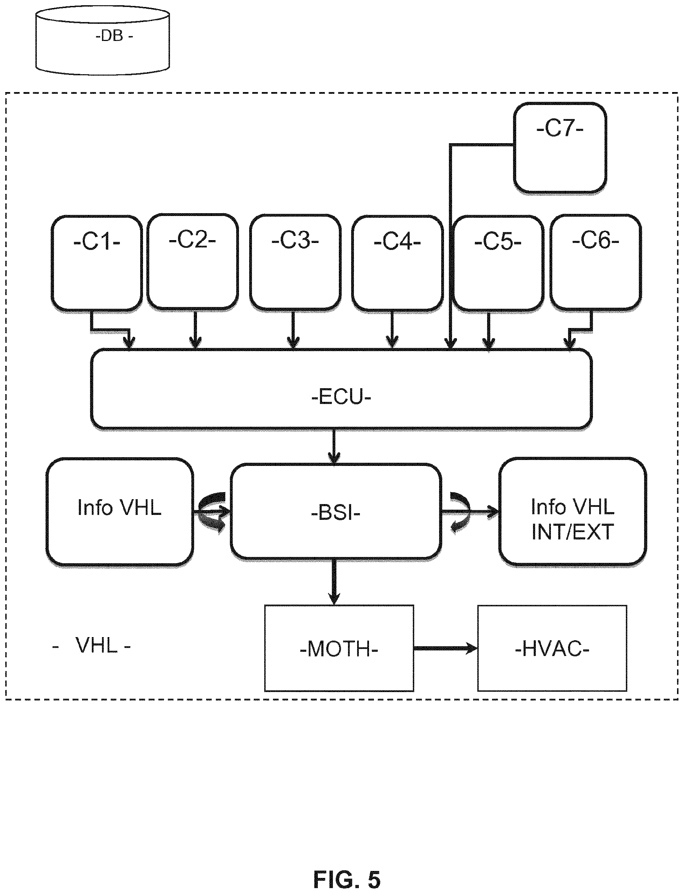

L'étape 100 de confirmation de la position du véhicule à l'intérieur ou à l'extérieur d'un bâtiment est maintenant décrite en référence à la figure 3 ainsi qu'à la figure 5 pour ce qui est des moyens mis en oeuvre par le système pour implémenter ladite étape 100.

Dans cette étape 100, le procédé part des statuts suivants :
- l'heure de la journée est connue (midi, minuit, ...) 101 de manière à déterminer s'il fait nuit ou jour ;
- Le moteur tourne en régime établi ou est en phase de démarrage 102 ;
- une fenêtre de type « pop-up » s'affiche 103 en incrustation dans une image acquise et transmise par une caméra frontale du véhicule, sur un écran d'une IHM (Interface Homme Machine) appartenant au véhicule, ou l'IHM d'un appareil nomade, par exemple sur l'écran tactile du Smartphone du conducteur.

Le procédé consiste ensuite à implémenter en parallèle les étapes suivantes :
Dans l'étape 110, le procédé consiste à détecter si l'éclairage ambiant (par éclairage ambiant on entend la lumière dans laquelle est baigné le véhicule) est d'origine artificielle (éclairage électrique) ou naturelle (lumière du jour) pour en déduire si le véhicule est situé à l'intérieur ou à l'extérieur d'un bâtiment.

Le procédé exploite avantageusement cette information en la combinant avec une information de temps (durée) d'éclairage pour déterminer si le véhicule est à l'intérieur d'un bâtiment.

Pour cela, le procédé consiste à analyser la fréquence de l'intensité de l'éclairage ambiant (par exemple 50Hz pour une fréquence du réseau électrique de 50Hz) et/ou la fréquence de fluctuation de l'éclairage (par exemple, la fréquence de fluctuation/scintillement d'un tube fluorescent est typiquement de l'ordre de 100Hz pour une fréquence réseau de 50Hz.) suite à l'activation de l'allumage des feux.

Ainsi, si le résultat de l'analyse fréquentielle de l'éclairage est 50Hz, et que l'allumage des feux perdure pendant une durée déterminée (durée suffisamment longue pour en déduire que le véhicule est dans un espace éclairé de manière artificielle d'origine électrique), alors le procédé en déduit que le véhicule est à l'intérieur d'un bâtiment.

Il est également possible de combiner l'information horaire (heure de la journée) 101 avec l'information de fréquence de l'éclairage pour en déduire que l'éclairage extérieur est d'origine naturelle, de jour (soleil), ou électrique, de nuit (éclairage public).

L'information du niveau d'intensité ou de luminosité de l'éclairage ambiant est déjà utilisée pour l'activation automatique de l'allumage des feux d'un véhicule automobile.

Ce traitement ne nécessite aucun capteur supplémentaire.

Le capteur de lumière C5 (FIG. 5) tel qu'un capteur d'intensité ou de luminosité standard ou une caméra de type CCD (Charge Coupled Device) ou autre), transmet l'information de lumière (ou le flux vidéo de la caméra) à des moyens de traitement tels qu'un calculateur embarqué qui reçoit et traite les différents signaux reçus des capteurs du véhicule. Ce calculateur est communément désigné par l'acronyme anglo-saxon ECU (Electronic Control Unit) ou en français UCE (Unité de commande Electronique) (FIG. 5)

L'ECU traite l'information de lumière, ou la séquence vidéo, pour en extraire l'information de position du véhicule : véhicule à l'extérieur VHL EXT ou à l'intérieur VHL INT.

L'ECU transmet l'information de position à des moyens de commande tel qu'un autre calculateur du véhicule, communément désigné par l'acronyme BSI (Boitier de Servitude Intelligent) qui est l'unité de commande qui transforme les informations reçues de l'ECU, en informations de commande, via un réseau multiplexé du véhicule supporté par un bus de type LIN ou CAN ou un réseau filaire ETHERNET ou un réseau sans fil utilisant le protocole de communication Wifi, ... (FIG. 5)

Ainsi, cette information est exploitée comme l'un des paramètres d'entrée du système selon l'invention qui confirmera la position du véhicule à l'intérieur ou à l'extérieur d'un bâtiment.

Dans l'étape 120, le procédé consiste à détecter le niveau de pollution de l'air ambiant quand le moteur tourne ou est en cours de démarrage 102.

Par air ambiant, on entend l'air contenu dans un espace entourant le véhicule.

Cette pollution pourra être d'origine particulaire (ex. PM 2.5 = micro particles) ou d'origine gazeuse (CO2 ou NOx) ou autre.

Si le niveau de pollution de l'air ambiant varie dans une plage déterminée caractérisant un air ambiant de bonne qualité, autrement dit le moteur tournant ou en cours de démarrage n'impacte pas ou peu la qualité de l'air ambiant, alors le procédé en déduit que le véhicule est à l'extérieur du bâtiment (VHL EXT).

A l'inverse, au-delà d'un niveau de pollution élevé sortant de ladite plage (supérieur à un seuil déterminé), au moment du démarrage du moteur, alors le procédé en déduit que le véhicule est à l'intérieur du bâtiment (VHL INT).

Dans ce dernier cas de figure, le procédé pourra forcer l'arrêt du moteur.

Pour cela le procédé consiste à mesurer le niveau de pollution de l'air ambiant, sur une période de temps déterminé, à et analyser le flux continu de données en utilisant une technique dite de modulation de largeur d'impulsions connue sous l'acronyme anglo-saxon PWM (Pulse Width Modulation), technique couramment utilisée pour synthétiser des signaux continus à l'aide de circuits à fonctionnement tout ou rien, ou plus généralement à états discrets.

Le principe général est qu'en appliquant une succession d'états discrets pendant des durées bien choisies, on peut obtenir en moyenne sur une certaine durée n'importe quelle valeur intermédiaire et en déduire une variation de cette valeur.

L'information est transmise à l'ECU via un bus de type CAN ou LIN et qui, en fonction du niveau moyen de pollution, détermine si le véhicule est à l'extérieur VHL EXT ou à l'intérieur VHL INT du bâtiment (une variation élevée, supérieure à un seuil déterminé est révélatrice d'un véhicule démarrant dans un espace confiné tel qu'un parking à l'intérieur d'un bâtiment). L'ECU transmet ensuite l'information de position au BSI sur le réseau multiplexé du véhicule supportée par un bus de type LIN ou CAN ou un réseau filaire ETHERNET ou un réseau sans fil utilisant le protocole de communication Wifi ...

Ce traitement ne nécessite aucun capteur supplémentaire.

L'étape 130 succède à l'étape 103 qui consistait à générer une fenêtre interactive de type « pop-up » par incrustation d'image sur un écran du véhicule et/ou sur celui du Smartphone du conducteur via une application mobile dédiée.

L'image principale qui apparaît en fond d'écran pourra être l'image acquise par une caméra frontale du véhicule apte à restituer ce que voit ou pourrait voir le conducteur, à l'avant dudit véhicule.

La fenêtre interactive « pop-up » affiche une requête à l'attention du conducteur lui demandant de valider l'information visuelle selon laquelle le véhicule est situé à l'intérieur d'un bâtiment.

Une fois la requête validée par le conducteur (véhicule à l'intérieur d'un bâtiment VHL INT), l'information est transmise à un module de communication de l'ECU via un réseau de communication sans fil exploitant par exemple la norme GSM (2G, ... nG).

L'ECU traite l'information (validation véhicule à l'intérieur d'un bâtiment VHL INT) et la transmet au BSI sur le réseau multiplexé du véhicule supportée par un bus de type LIN ou CAN ou via un réseau filaire ETHERNET ou sans fil exploitant le protocole de communication Wifi. Ce traitement ne nécessite aucun capteur supplémentaire.

Selon l'étape 130, il est demandé au conducteur de valider une information qu'il visualise en direct sur l'écran de son Smartphone.

Les informations issues des étapes 110, 120 et 130 sont fusionnées de manière à déterminer de façon fiable si le véhicule est à l'intérieur VHL INT ou à l'extérieur VHL EXT. Une pondération est fixée pour chaque type de capteur. La pondération peut être identique quel que soit le capteur ou bien spécifique à un type de capteur.

Dans l'exemple de la figure 3, la pondération peut être choisie identique pour les trois types de capteurs et égale à 100%.

Ainsi, si l'une des informations remontées par les trois étapes 110, 120 et 130 indiquent soit que la lumière est artificielle, soit une augmentation de pollution de l'air ambiant autour du véhicule soit une information visuelle induisant que le véhicule est localisé dans un parking, alors la probabilité 140 que le véhicule soit à l'intérieur (VHL INT) est maximale.

Si l'une au moins des trois informations indique 140 que le véhicule est à l'intérieur VHL INT alors le procédé arrête le moteur si ce dernier tourne.

La ventilation du véhicule reste active à l'aide de la batterie, jusqu'à la fin du besoin.

A l'inverse, si l'information restituée par l'une des trois étapes 110, 120 et 130 indique soit que la lumière est naturelle (lumière du jour) (ou que le statut de départ 101 reste inchangé), soit l'absence d'augmentation significative de pollution de l'air ambiant autour du véhicule, alors que le moteur tourne 102 soit qu'il n'y a pas eu de confirmation humaine induisant que le véhicule est à l'intérieur d'un bâtiment, alors la probabilité de détection 140 que le véhicule soit à l'extérieur (VHL EXT) est maximale.

L'étape 200 commande l'autorisation de démarrage du moteur et du compresseur du groupe de climatisation dans la mesure où les conditions de températures le justifient comme déjà décrit ci-dessus.

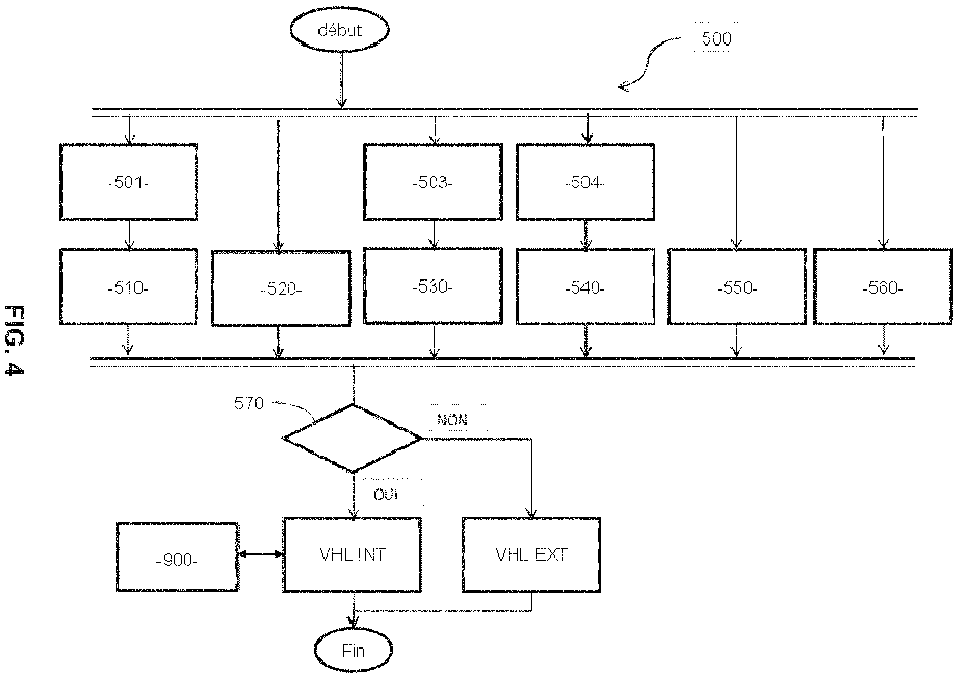

L'étape 500 (FIG. 2) de détection d'entrée de parking est maintenant décrite en référence à la figure 4 ainsi qu'à la figure 5 pour ce qui est des moyens mis en oeuvre par le système pour implémenter ladite étape 500.

Elle débute par des mises à jour d'informations 501 et 503, 504 qui seront utiles à la détection :
- une première mise à jour 501 des informations des données GPS du parking à partir d'une base de données DB partagée accessible via une liaison sans fil et Internet ;
- une deuxième mise 503, 504 à jour des images acquises à l'intérieur du parking à partir de la base de données DB ;

Le procédé consiste ensuite à implémenter en parallèle les étapes suivantes :
Dans une étape 510, le procédé consiste à détecter si le véhicule entre dans un parking à partir d'une information délivrée par un récepteur GPS présent à bord du véhicule.

Un récepteur GPS est usuellement utilisé pour situer le véhicule dans son environnement. Pour cela, il est couplé à une cartographie de l'environnement afin d'assurer une aide à la navigation pour le conducteur.

Les récepteurs GPS d'application grand public, permettent d'atteindre aujourd'hui une précision dans la localisation du véhicule porteur du récepteur par rapport à son environnement immédiat de l'ordre de quelques mètres.

Le procédé selon l'invention exploite cette information pour extraire de la cartographie de l'environnement immédiat du véhicule, l'information précise selon laquelle le véhicule entre dans un bâtiment et donc, a priori, dans un parking à l'intérieur du bâtiment.

Le procédé suit le déplacement du véhicule, en identifiant si la trajectoire calculée du véhicule intersecte une zone définie comme étant un espace confiné autrement dit quand la position du véhicule à un instant donné est confondue avec la position de l'interface entre l'extérieur de l'espace confiné et l'intérieur de l'espace confiné (cas où le véhicule rentre dans l'espace confiné) ou inversement avec la position de l'interface entre l'intérieur de l'espace confiné et l'extérieur de l'espace confiné (cas où le véhicule sort de l'espace confiné).

Pour cela, le récepteur GPS, associé au système de navigation, délivre un flux vidéo et le transmet à l'ECU via une interface standard pour la transmission de données à grande vitesse, connue sous l'acronyme anglo-saxon LVDS (Low Voltage Differential Signal).
Le flux vidéo est un signal vidéo composite (signal de base vidéo couleur analogique) connu sous l'acronyme anglo-saxon CVBS (Chroma Video Blanking Synchro) supporté par un réseau de communication filaire (ETHERNET) ou sans fil exploitant le protocole de communication Wifi.

L'ECU extrait du flux vidéo, l'information d'entrée de parking qu'il transmet au BSI sur le réseau multiplexé du véhicule supporté par un bus de type LIN ou CAN ou via un réseau filaire ETHERNET ou sans fil exploitant le protocole de communication Wifi. Ce traitement ne nécessite aucun capteur supplémentaire.

Dans une variante, le récepteur GSP utilisé est celui d'un Smartphone, couplé à une application de navigation, ou celui d'un autre dispositif nomade dédié à la navigation.

Le dispositif nomade transmet l'information de localisation à l'ECU en utilisant les technologies de communication sans fil tels que Bluetooth, Wifi ... ou un bus USB, Ethernet, ...

De la même manière que précédemment, L'ECU extrait l'information d'entrée de parking qu'il transmet au BSI sur le réseau multiplexé du véhicule supporté par un bus de type LIN ou CAN ou via un réseau filaire ETHERNET ou sans fil exploitant le protocole de communication Wifi. Ce traitement ne nécessite aucun capteur supplémentaire.

Dans une étape 520, le procédé consiste à exploiter les informations délivrées par un accéléromètre présent à bord du véhicule, pour déterminer si le véhicule entre dans un sous-sol.

Les véhicules sont aujourd'hui tous équipés d'accéléromètres qui sont notamment utilisés pour le déclenchement des coussins gonflables de sécurité.

Ils sont également utilisés dans les ADAS, acronyme anglo-saxon pour Advanced Driver Assistance Systems, servant à désigner les systèmes d'aide à la conduite mettant en oeuvre une pluralité de capteurs dont des caméras et autres capteurs aptes à suivre le comportement du véhicule et de son conducteur, et analyser l'environnement du véhicule.

Dans les ADAS, on utilise notamment des accéléromètres pour détecter si le véhicule est en montée ou en descente afin d'apporter l'aide adéquate au conducteur : assistance au démarrage dans les montées et assistance au freinage dans les descentes.

Ainsi, le procédé selon l'invention exploite ces informations de sens de la pente montante ou descendante pour déterminer si le véhicule descend ou monte : si le véhicule descend, il y a probabilité que le véhicule entre dans un parking sous-terrain. A l'inverse, si le véhicule monte, il y a probabilité que le véhicule sorte d'un parking sous-terrain

L'information délivrée par l'accéléromètre est transmise à l'ECU via un bus de type CAN par exemple.

L'ECU extrait de l'information délivrée par l'accéléromètre, l'information d'entrée de parking qu'il transmet au BSI sur le réseau multiplexé du véhicule supporté par un bus de type LIN ou CAN ou via un réseau filaire ETHERNET ou sans fil exploitant le protocole de communication Wifi. Ce traitement ne nécessite aucun capteur supplémentaire.

En l'absence d'accéléromètre dans le véhicule, on pourra utiliser l'accéléromètre du Smartphone du conducteur.

Dans des étapes 530 et 540, succédant à la mise à jour de l'étape 503, 504, des caméras frontale et arrière disposées respectivement à l'avant et à l'arrière du véhicule, restituent des informations caractérisant l'environnement du véhicule : route, aire de parking, type de parking, type de bâtiment, signalétique (bandes, panneaux, marquages au sol, couleur du sol, ...) sous la forme d'un flux vidéo via une interface standard pour la transmission de données à grande vitesse, connue sous l'acronyme anglo-saxon LVDS (Low Voltage Differential Signal).

Le flux vidéo est un signal vidéo composite (signal de base vidéo couleur analogique) connu sous l'acronyme anglo-saxon CVBS (Chroma Video Blanking Synchro) supporté par un réseau de communication filaire (ETHERNET) ou sans fil exploitant le protocole de communication Wifi.

L'ECU traite le flux vidéo, pour en extraire l'information : véhicule à l'extérieur ou à l'intérieur.

L'ECU transmet ensuite l'information au BSI sur le réseau multiplexé du véhicule supporté par un bus de type LIN ou CAN ou via un réseau filaire ETHERNET ou sans fil exploitant le protocole de communication Wifi. Ce traitement ne nécessite aucun capteur supplémentaire.

Dans une étape 550, un capteur de luminosité détecte si un changement brutal de luminosité se produit.

Le processus est similaire à celui développé décrit à l'étape 110 à la différence près que c'est la différence d'intensité entre deux instants consécutifs qui est exploitée et non pas la fréquence de l'éclairage ambiant suite à l'allumage des feux.

Une différence d'intensité dans le sens jour/nuit induit une forte probabilité que le véhicule est entré dans un parking sous-terrain.

Dans l'étape 560, le procédé consiste à détecter une variation brutale du niveau de pollution de l'air ambiant (un pic de pollution) dans l'environnement proche du véhicule.

L'information de niveau de qualité de l'air est aujourd'hui utilisée pour commander automatiquement l'activation du mode recyclage du groupe de climatisation du véhicule.

Le procédé exploite avantageusement cette information pour déterminer si le véhicule est à l'intérieur ou à l'extérieur d'un bâtiment en détectant une variation élevée, supérieure à un seuil déterminé, traduisant un pic de pollution révélateur d'un véhicule évoluant dans un espace confiné tel qu'un parking à l'intérieur d'un bâtiment.

Le processus est similaire à celui développé pour décrire l'étape 120.

Ce traitement ne nécessite aucun capteur supplémentaire.

De la même manière que pour l'étape 100 de confirmation de position du véhicule (extérieur/intérieur), les informations issues des étapes 510, 520, 530, 540, 550 et 560 sont fusionnées de manière à déterminer de façon fiable si le véhicule est entré à l'intérieur d'un parking ou pas.

L'étape 570 a pour fonction de gérer les probabilités de détection lorsque les informations issues des étapes 510, 520, 530, 540, 550 et 560 divergent.

La décision est prise en fonction d'une pondération attribuée respectivement à chacune des étapes 510 à 560 comme décrit précédemment en référence à l'étape 100.

L'information issue de l'étape 500 (FIG. 1), correspondant à la sortie de l'étape 570 (FIG. 4) est soumise à un test « véhicule détecté à l'extérieur ? », et si le résultat du test est positif (VHL EXT ? = OUI) alors le procédé se poursuit par l'étape 100, sinon le procédé se poursuit par l'étape 600 (FIG. 2).

La présente invention propose également une étape 900 (FIG. 4) qui consiste, après avoir détecté que le véhicule était à l'intérieur d'un bâtiment, (VHL INT) à mémoriser la position GPS du véhicule (coordonnées de géolocalisation) ainsi que les images acquises par les caméras frontale et arrière pour cette positon.

Ces informations vont enrichir la base de données DB, déjà mentionnée pour décrire les étapes 503 et 504 (représenté à la figure 5), et ainsi améliorer la qualité de détection de position du véhicule lors d'un futur stationnement dans ce même bâtiment.

Ces mêmes informations pourront être partagées avec d'autres véhicules, autorisés à accéder à la base de données DB qui est hébergée dans un serveur distant, accessible via Internet.

Après détection du véhicule à l'intérieur d'un bâtiment, les informations de position délivrées par le récepteur GPS ainsi que les images acquises par les caméras frontale et arrière sont mémorisées dans le BSI.

Les informations sont transmises à l'ECU puis transmises de l'ECU au serveur hébergeant la base de données DB, via le réseau de téléphonie GSM par exemple (voir description de l'étape 130)

Le serveur pourra alors partager les informations disponibles dans la base de données avec d'autres véhicules autorisés, en utilisant leurs BSI et ECU dans la mesure où ces derniers sont équipés d'un module de téléphonie mobile ou que les conducteurs de ces véhicules disposent d'un appareil nomade tel qu'un Smartphone apte à exploiter les informations transmises par le serveur.

Le procédé qui vient d'être décrit est mis en oeuvre par l'architecture globale du système selon l'invention illustré schématiquement à la figure 5.

Cette architecture se base sur une pluralité de capteurs C1 à C7 choisis de manière à robustifier la détection en fusionnant les informations transmises pas la pluralité de capteurs.

Le terme capteur devra être compris au sens large comme couvrant tout dispositif apte à transformer une information représentative de l'environnement proche du véhicule, en information exploitable par le véhicule et/ou le conducteur.
La partie de l'architecture globale de la figure 5, dédiée à l'implémentation de l'étape de localisation 100, comporte :
- une caméra frontale C3 apte à acquérir et restituer des images de l'avant du véhicule qui pourront être analysées pour déterminer si le véhicule est dans un espace confiné ;
- un capteur de luminosité C5 apte à délivrer une information permettant l'analyse fréquentielle de la lumière ;
- un capteur de niveau de pollution C6 apte à détecter une augmentation du niveau de pollution dans l'environnement proche du véhicule pour préciser que le véhicule est dans un espace confiné ;
- une IHM interactive C7 proposant au conducteur de valider une information visuelle confirmant que le véhicule est dans un espace confiné.
Les capteurs C3, C5, C6 et C7 sont couplés à l'ECU lui-même couplé au BSI pour commander le moteur MOTH et le groupe de climatisation HVAC.
La partie de l'architecture globale de la figure 5, dédiée à l'implémentation de l'étape de localisation 500, comporte :
- un récepteur GPS C1 et sa cartographie associée ;
- un accéléromètre C2 apte à préciser le sens de la pente sur lequel se trouve le véhicule ;
- la caméra frontale C3 apte à acquérir et restituer des images de l'avant du véhicule qui pourront être analysées pour déterminer la position du véhicule par rapport à un espace confiné ;
- une caméra arrière C4 apte à acquérir et restituer des images de l'arrière du véhicule qui pourront être analysées pour déterminer la position du véhicule par rapport à un espace confiné ;
- le capteur de luminosité C5 apte à détecter un changement de l'intensité lumineuse quand le véhicule rentre dans l'espace de stationnement ;
- le capteur de niveau de pollution C6 apte à détecter les élévations rapides du niveau de pollution (pic de pollution) de l'air ambiant pour préciser que le véhicule entre dans un espace confiné ;
Les capteurs C1, C2 et C4, sont également couplés à l'ECU lui-même couplé au BSI pour commander le moteur MOTH et le groupe de climatisation HVAC.

## Revendications

1. Procédé de localisation (500) d'un véhicule (VHL) à moteur (MOTH), par rapport à un espace confiné, ledit véhicule étant équipé d'un groupe de climatisation (HVAC) et d'une pluralité de capteurs, **caractérisé en ce qu'**il consiste, à partir des informations délivrées par la pluralité de capteurs :
- dans une première étape (510), à détecter la direction de déplacement du véhicule par rapport à l'espace confiné ;
- dans une deuxième étape (520), à déterminer le sens de la pente sur laquelle se déplace le véhicule ;
- dans une troisième étape (560), à mesurer une variation du niveau moyen de pollution de l'air ambiant, sur une période de temps déterminée ; une variation supérieure à un seuil déterminé étant un indicateur d'espace confiné ; et
- à partir du résultat des première, deuxième et troisième étapes (510, 520, 560) à en déduire que le véhicule entre ou sort de l'espace confiné.

2. Procédé selon la revendication précédente, **caractérisé en ce qu'**il consiste en outre :
- dans des quatrième et cinquième étapes (530 et 540), à restituer des informations caractérisant l'environnement du véhicule ; et
- dans une sixième étape (550), à détecter si un changement de luminosité de l'éclairage ambiant se produit ; et
- à partir du résultat des six étapes (510-560) à en déduire que le véhicule entre ou sort de l'espace confiné.

3. Procédé de localisation (500) selon l'une des revendications précédente, **caractérisé en ce qu'**il consiste :
- dans la première étape (510), à détecter la direction de déplacement du véhicule par rapport à l'espace confiné à partir d'une information de géolocalisation délivrée par un récepteur GPS, et la cartographie associée, présent à bord du véhicule ;
- dans la deuxième étape (520), à exploiter les informations délivrées par un accéléromètre présent à bord du véhicule pour déterminer le sens de la pente sur laquelle se déplace le véhicule ; et
- dans la sixième étape (560), à détecter une variation du niveau de pollution de l'air ambiant.

4. Procédé de localisation (500) selon la revendication 2, **caractérisé en ce qu'**il consiste :
- dans les quatrième et cinquième étapes (530 et 540), à restituer des informations caractérisant l'environnement du véhicule à partir de caméras frontale et arrière disposées respectivement à l'avant et à l'arrière du véhicule ;
- dans la sixième étape (550), à détecter si un changement de luminosité se produit à partir d'un capteur de luminosité.

5. Procédé selon l'une des revendications 1 ou 3, **caractérisé en ce que** la première étape (510) succède à une étape de mise à jour (501) des informations de cartographie à partir d'une base de données (DB) contenant les dernières informations issues de véhicules ayant eu les mêmes informations de géolocalisation.

6. Procédé selon l'une quelconque des revendications 2 ou 4, **caractérisé en ce que** les quatrième et cinquième étapes (530 et 540) succèdent respectivement à des étapes de mises à jour (503 et 504) des informations caractérisant l'environnement du véhicule, à partir d'une base de données (DB) contenant les dernières informations issues de véhicules ayant eu les mêmes informations de géolocalisation.

7. Système pour la mise en oeuvre du procédé selon l'une quelconque des revendications précédentes, **caractérisé en ce qu'**il comporte une pluralité de capteurs, parmi lesquels :
- un récepteur GPS (C1) et sa cartographie associée ;
- un accéléromètre (C2) apte à préciser le sens de la pente sur lequel se trouve le véhicule (VHL) ;
- une caméra frontale (C3) apte à acquérir et restituer des images de l'avant du véhicule aptes à être analysées pour déterminer si le véhicule entre dans un espace confiné ;
- une caméra arrière (C4) apte à acquérir et restituer des images de l'arrière du véhicule aptes à être analysées afin de préciser si le véhicule est dans un espace confiné ;
- un capteur de luminosité (C5) apte à détecter un changement de l'intensité lumineuse quand le véhicule rentre dans un espace confiné ;
- un capteur de niveau de pollution (C6) apte à mesurer une variation du niveau moyen de pollution de l'air ambiant, sur une période de temps déterminée;
une variation supérieure à un seuil déterminé étant un indicateur d'espace confiné
ladite pluralité de capteurs étant couplée à des moyens de traitement (ECU) du véhicule traitant les informations délivrées par la pluralité de capteurs, eux-mêmes couplés à des moyens de commande (BSI) du véhicule, recevant les informations traitées par les moyens de traitement (ECU) pour commander le groupe de climatisation (HVAC) via le moteur du véhicule.

8. Véhicule automobile, **caractérisé en ce qu'**il comprend le système selon la revendication précédente.

## Patentansprüche

1. Verfahren zur Ortung (500) eines Fahrzeugs (VHL) mit Motor (MOTH) bezüglich eines begrenzten Raums, wobei das Fahrzeug mit einer Klimaanlage (HVAC) und einer Mehrzahl von Sensoren ausgestattet ist, **dadurch gekennzeichnet, dass** es darin besteht, ausgehend von den Informationen, die von der Mehrzahl von Sensoren geliefert werden:
- bei einem ersten Schritt (510) die Bewegungsrichtung des Fahrzeugs bezüglich des begrenzten Raums zu erfassen;
- bei einem zweiten Schritt (520) die Richtung des Gefälles, auf dem sich das Fahrzeug bewegt, zu bestimmen;
- bei einem dritten Schritt (560) eine Variation des mittleren Umgebungsluftverschmutzungsniveaus während einer bestimmten Zeitspanne zu messen; wobei eine Variation, die größer ist als ein bestimmter Schwellenwert, ein Indikator eines begrenzten Raums ist; und
- ausgehend von dem Resultat des ersten, zweiten und dritten Schritts (510, 520, 560) abzuleiten, dass das Fahrzeug in den begrenzten Raum fährt oder aus ihm herausfährt.

2. Verfahren nach dem vorstehenden Anspruch, **dadurch gekennzeichnet, dass** es außerdem aus Folgendem besteht:
- bei dem vierten und fünften Schritt (530 und 540) Informationen, die die Umgebung des Fahrzeugs charakterisieren, wiederzugeben; und
- bei einem sechsten Schritt (550) zu erfassen, ob eine Helligkeitsänderung der Umgebungsbeleuchtung auftritt; und
- ausgehend von dem Resultat der sechs Schritte (510 - 560) abzuleiten, dass das Fahrzeug in den begrenzten Raum fährt oder aus ihm herausfährt.

3. Verfahren zur Ortung (500) nach einem der vorstehenden Ansprüche, **dadurch gekennzeichnet, dass** es aus Folgendem besteht:
- bei dem ersten Schritt (510), die Bewegungsrichtung des Fahrzeugs bezüglich des begrenzten Raums ausgehend von einer Ortsbestimmungsinformation, die von einem GPS-Empfänger und der dazugehörenden Kartographie, die an Bord des Fahrzeugs anwesend sind, geliefert wird, zu erfassen;
- bei dem zweiten Schritt (520), die Informationen, die von einem Beschleunigungsmesser, der an Bord des Fahrzeugs anwesend ist, geliefert werden, zu nutzen, um die Richtung des Gefälles, auf dem sich das Fahrzeug bewegt, zu bestimmen; und
- bei dem sechsten Schritt (560) eine Variation des Umgebungsluftverschmutzungsniveaus zu erfassen.

4. Verfahren zur Ortung (500) nach Anspruch 2, **dadurch gekennzeichnet, dass** es aus Folgendem besteht:
- bei dem vierten und fünften Schritt (530 und 540) Informationen, die die Umgebung des Fahrzeugs charakterisieren, ausgehend von einer Front- und Heckkamera, die jeweils an der Vorderseite und an der Rückseite des Fahrzeugs angeordnet sind, wiederzugeben;
- bei dem sechsten Schritt (550) ausgehend von einem Helligkeitssensor zu erfassen, ob eine Helligkeitsänderung auftritt.

5. Verfahren nach einem der Ansprüche 1 oder 3, **dadurch gekennzeichnet, dass** der erste Schritt (510) auf einen Aktualisierungsschritt (501) der Kartographieinformationen ausgehend von einer Datenbank (DB), die die jüngsten Informationen enthält, die aus Fahrzeugen hervorgehen, die dieselben Ortungsinformationen hatten, folgt.

6. Verfahren nach einem der Ansprüche 2 oder 4, **dadurch gekennzeichnet, dass** der vierte und fünfte Schritt (530 und 540) jeweils auf Aktualisierungsschritte (503 und 504) der Informationen, die die Umgebung des Fahrzeugs charakterisieren, folgen, ausgehend von einer Datenbank (DB), die die jüngsten Informationen enthält, die aus Fahrzeugen hervorgehen, die dieselben Ortungsinformationen hatten.

7. System zur Umsetzung des Verfahrens nach einem der vorstehenden Ansprüche, **dadurch gekennzeichnet, dass** es eine Mehrzahl von Sensoren umfasst, darunter:
- einen GPS-Empfänger (C1) und seine dazugehörende Kartographie;
- einen Beschleunigungsmesser (C2), der geeignet ist, um die Richtung des Gefälles, auf der sich das Fahrzeug (VHL) befindet, zu präzisieren;
- eine Frontkamera (C3), die geeignet ist, Bilder der Vorderseite des Fahrzeugs, die analysiert werden können, um zu bestimmen, ob das Fahrzeug in einen begrenzten Raum fährt, zu erfassen und wiederzugeben;
- eine Heckkamera (C4), die geeignet ist, um Bilder der Rückseite des Fahrzeugs, die analysiert werden können, um zu präzisieren, ob sich das Fahrzeug in einem begrenzten Raum befindet, zu erfassen und wiederzugeben;
- einen Helligkeitssensor (C5), der geeignet ist, eine Änderung der Leuchtstärke zu erfassen, wenn das Fahrzeug in einen begrenzten Raum fährt;
- einen Verschmutzungsniveausensor (C6), der geeignet ist, eine Variation der mittleren Umgebungsluftverschmutzungsniveaus über eine bestimmte Zeitspanne zu messen;
wobei eine Variation, die größer ist als ein bestimmter Schwellenwert, ein Indikator des begrenzten Raums ist,
wobei die Mehrzahl von Sensoren mit Verarbeitungsmitteln (ECU) des Fahrzeugs gekoppelt ist, die die Informationen verarbeiten, die von der Mehrzahl von Sensoren geliefert werden, die selbst mit Steuermitteln (BSI) des Fahrzeugs gekoppelt sind, die die Informationen empfangen, die von den Verarbeitungsmitteln (ECU) verarbeitet werden, um die Klimaanlage (HVAC) über den Motor des Fahrzeugs zu steuern.

8. Kraftfahrzeug, **dadurch gekennzeichnet, dass** es das System gemäß dem vorstehenden Anspruch umfasst.

## Claims

1. A method (500) for locating a motor (MOTH) vehicle (VHL), in relation to a confined space, said vehicle being equipped with an air-conditioning unit (HVAC) and a plurality of sensors, **characterized in that** it consists, from information delivered by the plurality of sensors:
- in a first step (510), in detecting the direction of movement of the vehicle with respect to the confined space;
- in a second step (520), in determining the direction of the slope on which the vehicle is moving;
- in a third step (560), in measuring a variation of the mean pollution level of the ambient air, over a specified period of time; a variation greater than a specified threshold being an indicator of a confined space; and
- from the result of the first, second and third steps (510, 520, 560), in deducing therefrom that the vehicle is entering or leaving the confined space.

2. The method according to the preceding claim, **characterized in that** it further consists:
- in fourth and fifth steps (530 and 540), in bringing together information characterizing the environment of the vehicle; and
- in a sixth step (550), in detecting if a change of luminosity of the ambient lighting occurs; and
- from the result of the six steps (510 - 560) in deducing therefrom that the vehicle is entering or leaving the confined space.

3. The method (500) for locating according to one of the preceding claims, **characterized in that** it consists:
- in the first step (510), in detecting the direction of movement of the vehicle in relation to the confined space from an item of geolocation information delivered by a GPS receiver, and the associated cartography, present on board the vehicle;
- in the second step (520), in utilizing the delivered information by an accelerometer present on board the vehicle for determining the direction of the slope on which the vehicle is moving; and
- in the sixth step (560), in detecting a variation of the level of pollution of the ambient air.

4. The method (500) for locating according to claim 2, **characterized in that** it consists:
- in the fourth and fifth steps (530 and 540), in bringing together information characterizing the environment of the vehicle from front and rear cameras arranged respectively at the front and at the rear of the vehicle;
- in the sixth step (550), in detecting if a change of luminosity occurs from a luminosity sensor.

5. The method according to one of claims 1 or 3, **characterized in that** the first step (510) succeeds a step (501) of updating the cartography information from a database (DB) containing the last information issued concerning vehicles having had the same geolocation information.

6. The method according to any one of claims 2 or 4, **characterized in that** the fourth and fifth steps (530 and 540) succeed respectively updating steps (503 and 504) of the information characterizing the environment of the vehicle, from a database (DB) containing the last information issued concerning vehicles having had the same geolocation information.

7. A system for implementing the method according to any one of the preceding claims, **characterized in that** it comprises a plurality of sensors, including:
- a GPS receiver (C1) and its associated cartography;
- an accelerometer (C2) able to specify the direction of the slope on which the vehicle (VHL) is situated;
- a front camera (C3) able to acquire and bring together images of the front of the vehicle, able to be analysed so as to determine if the vehicle is entering a confined space;
- a rear camera (C4) able to acquire and bring together images of the rear of the vehicle, able to be analysed so as to specify if the vehicle is in a confined space;
- a luminosity sensor (C5) able to detect a change in the light intensity when the vehicle enters into a confined space;
- a pollution level sensor (C6) able to measure a variation of the mean pollution level of the ambient air, over a specified period of time;
a variation greater than a specified threshold being an indicator of a confined space,
said plurality of sensors being coupled to processing means (ECU) of the vehicle, processing the information delivered by the plurality of sensors, themselves coupled to control means (BSI) of the vehicle, receiving the information processed by the processing means (ECU) for controlling the air-conditioning unit (HVAC) via the engine of the vehicle.

8. A motor vehicle, **characterized in that** it includes the system according to the preceding claim.
